# EUROPÄISCHE PATENTANMELDUNG

(11) **EP 1 748 101 A2**
(43) Veröffentlichungstag der Anmeldung: **31.01.2007**
(21) Anmeldenummer: 06013056.4
(22) Anmeldetag: 24.06.2006
(51) Int. Cl.: D04H 13/00

(54) **Voluminöse Faserlaminate und ihre Herstellung**

(30) Priorität: 26.07.2005 DE 102005034821
(71) Anmelder: Fleissner GmbH, 63329 Egelsbach (DE); Reifenhäuser GmbH & Co. KG Maschinenfabrik, 53839 Troisdorf (DE)
(72) Erfinder: Sommer, Sebastian, 53844 Troisdorf (DE); Ressler, Matthias, 64331 Gräfenhausen (DE)
(74) Vertreter: Meyer-Dulheuer, Karl-Hermann

(57) **Zusammenfassung**

Es wird ein voluminöses Faserlaminat beschrieben, dass zwischen zumindest zwei Trägervliesen eine oder mehrere Lagen eines absorptionsfähigen Fasermaterials enthält, das durch Wasservernadelung verfestigt ist, wobei es über die gesamte Fläche des Faserlaminats Bereiche mit hoher Vernadelungsdichte und Bereiche mit geringerer Vernadelungsdichte unter Ausbildung einer steppdeckenartigen Struktur aufweist. Eine hierfür genannte Vorrichtung zeichnet sich dadurch aus, dass die Wasservernadelungseinrichtung neben Düsenstreifen mit einer großen Zahl von Düsen pro Flächeneinheit auch Düsenstreifen mit einer geringeren Zahl von Düsen aufweist oder auf einen oder mehreren Düsenstreifen ganz verzichtet wird.

## Beschreibung

Gegenstand der Erfindung sind voluminöse Faserlaminate, die eine oder mehrere Lagen eines absorptionsfähigen Fasermaterials, welches durch Wasservernadelung verfestigt ist, enthalten sowie ein Verfahren und eine Vorrichtung zu ihrer Herstellung.

Aus der EP 1 250 482 B1 ist bereits ein Verfahren zur Herstellung eines Verbundvlieses aus zumindest einem Trägervlies, z. B. einem Spunbondvlies, und einer auf dieses Trägervlies aufgelegten Woodpulpschicht zur Herstellung eines Hygieneproduktes bekannt, wobei das Spunbondvlies vor der Beschichtung mit dem superabsorbierenden Material zur Vorverfestigung trocken verdichtet, dann die Woodpulpschicht aufgegeben und beide zusammen mit einer hydrodynamischen Wasservernadelung verfestigt und dann getrocknet werden.

Aus der EP 1 445 366 A2 ist weiterhin ein Verfahren zur Herstellung eines Faserlaminates, insbesondere eines saugfähigen Wischtuchs, bekannt, wobei zumindest ein Spinnvlies aus Filamenten vorverfestigt und auf das vorverfestigte Spinnvlies zumindest eine Faserschicht aus hydrophilen Fasern aufgebracht wird. Danach wird das Laminat aus Spinnvlies und Faserschicht hydrodynamisch verfestigt.

Schließlich ist aus der EP 1 524 350 A1 ein Faserlaminat, insbesondere ein saugfähiges Reinigungstuch aus zumindest einem vorverfestigten Spinnvlies aus Filamenten und aus zumindest einer Faserschicht aus hydrophilen Fasern bekannt, welches hydrodynamisch verfestigt ist und wobei in die Oberfläche des hydrodynamisch verfestigen Faserlaminats Prägedeformationen eingebracht werden. Bei der Herstellung derartiger saugfähiger Wisch- und Reinigungstücher werden die beiden Außenlagen aus vorverfestigten Spinnvliesen und die innere Lage aus Air-Laid Pulp durch eine Wasserstrahlverfestigung miteinander verbunden.

Derartige Produkte sind im Hinblick auf die Kosten und Festigkeiten den aus Krempelfaservliesen hergestellten Wisch- und Reinigungstüchern überlegen, jedoch wird in der Praxis ihre zu geringe Dicke und damit Absorptionsfähigkeit bemängelt. Auch war bisher die Delaminationsfestigkeit der einzelnen Lagen durch eine zu geringe Wasserstrahlverfestigung bei akzeptablem Energieverbrauch nicht ausreichend, so dass vor allem im angefeuchteten Zustand sich die Lagen leicht wieder voneinander trennen ließen. Dieser Nachteil wurde durch die in den vorstehend genannten EP 1 445 366 A2 und EP 1 524 350 A1 beschriebene Vorprägung der eingesetzten Vlieslagen oder durch Nachprägen des Wasserstrahls verfestigten Endproduktes verbessert. Es stellte sich deshalb die Aufgabe, nach alternativen Verfahren zur Herstellung von voluminösen und saugfähigen Faserlaminaten zu suchen, die ein dickeres und unempfindlicheres Produkt, insbesondere ein Wisch- und/oder Reinigungstuch liefern, oder auch für andere Anwendungen mit hohen Absorptionsanforderungen geeignet sind.

Gegenstand der Erfindung ist deshalb ein voluminöses Faserlaminat enthaltend zwischen zumindest zwei Trägervliesen eine oder mehrere Lagen eines absorptionsfähigen Fasermaterials, das durch Wasservernadelung verfestigt ist, bei dem über die gesamte Fläche des Faserlaminats Bereiche mit hoher Vernadelungsdichte und Bereiche mit geringerer Vernadelungsdichte unter Ausbildung einer steppdeckenartigen Struktur vorhanden sind. Bei seiner Herstellung wird verglichen mit den bisher bekannten Verfahren bei gleichem Energieeinsatz eine Produktionssteigerung durch eine erhöhte Produktionsgeschwindigkeit oder bei gleicher Produktionsmenge ein geringerer Energieeinsatz erreicht.

Für dieses Produkt können die unterschiedlichsten Trägervliese eingesetzt werden. Geeignet sind durch Thermokalander, durch Heißluftverfestigung und mechanische Vernadelung oder chemische Behandlung verfestigte Vliese. Auch Vliese aus einem Spinn-, Air-/Wetlaid oder Krempelprozess erhaltene Trägervliese sind geeignet. Auch Vliese aus Homofasern, Bikomponenten-, Mehrfachkomponenten- oder Mischfasern können eingesetzt werden. Bewährt haben sich auch Trägervliese aus Polyolefinen wie Polypropylen, Polyethylen oder aus Polyamid oder Polyester, aber auch aus natürlichen oder umgewandelten natürlichen Materialien wie Cellulose, Wolle, Baumwolle oder Lyocell und Viskose.

Das in dem erfindungsgemäßen voluminösen Faserlaminat eingesetzte absorptionsfähige Fasermaterial kann aus allen hydrophilen Fasermaterialien bestehen, wobei alle als Superabsorber bekannten Produkte hervorragend geeignet sind.

Für die Herstellung der Trägervliese werden erfindungsgemäß vorzugsweise Filamente mit einer Feinheit bzw. einem Durchmesser von 0,3 bis 3 Denier, bevorzugt 0,5 bis 2,5 Denier und sehr bevorzugt 0,8 bis 1,5 Denier eingesetzt. Zweckmäßigerweise liegt die Feinheit bzw. der Durchmesser der Filamente der Trägervliese unter 1,5 Denier. Erfindungsgegenstand sind auch voluminöse Faserlaminate, die aus einer Mehrzahl von Vlieslagen bzw. Filamentlagen bestehen. Die Filamente der einzelnen Lagen können dabei auch unterschiedliche Eigenschaften aufweisen.

Zur Herstellung des erfindungsgemäßen voluminösen Faserlaminats ist eine spezielle Vorrichtung entwickelt worden. Sie besteht aus einer Spunbond- oder Krempeleinrichtung, einer Luftverfestigungs- oder Kalandereinrichtung, einer sich ggf. unmittelbar anschließenden Einrichtung zum Aufgeben des absorptionsfähigen Fasermaterials auf das vorverfestigte Vlies und aus einer Wasservernadelungseinrichtung. Diese Wasservernadelungseinrichtung weist erfindungsgemäß einerseits Düsenstreifen mit einer großen Zahl von Düsen pro Flächeneinheit auf, gefolgt von Düsenstreifen mit einer geringeren Zahl von Düsen. Erfindungsgemäß kann verglichen mit dem bisherigen Stand der Technik auch ein Wasserbalken vollständig entfallen, wodurch Investitionskosten eingespart werden. Die Herstellung des Faserlaminats kann erfindungsgemäß auch auf Offline-Anlagen erfolgen, d.h. vorproduzierte aufgewickelte Deckvliese werden dem Aufgeben des absorptionsfähigen Fasermaterials und der Wasserstrahlverfestigung durch Abrollung zugeführt.

Unter einer großen Zahl von Düsen pro Düsenstreifen sind etwa 40 Düsen zu verstehen, die pro Zollbreite des Düsenstreifens nebeneinander angeordnet sind. Diese Düsen haben einen Durchmesser von üblicherweise um 0,12 mm. Dem gegenüber sind unter Düsenstreifen mit einer geringeren Zahl von Düsen solche zu verstehen, die pro Zollbreite des Düsenstreifens nur etwa 20 oder weniger Düsen enthalten. Die Teilung des Düsenstreifens sollte mit 5 bis 20 Loch pro Inch auf die Teilung der Kalanderpunkte bei Verwendung eines thermisch verfestigten (kalandrierten) (Spinn)vlieses abgestimmt sein, und zwar 1,5 bis 3 mal, bevorzugt 2 bis 2,5 mal größer als dieses Teilungsmaß. Zweckmäßigerweise beträgt der Durchmesser dieser Düsen mindestens 0,14 mm, bevorzugt 0,18 mm. Durch den größeren Durchmesser wird die Wassermenge pro Düse erhöht mit dem Effekt einer intensiveren Verbindung der Lagen miteinander. Das führt zu dem Effekt, dass die sog. Stopplinien, die eine Steppdeckenstruktur erzeugen, gebildet werden, welche ausreichen, um ein Delaminieren des Verbundes zu verhindern.

Dieser eine Düsenstreifen arbeitet von einer Seite und erzeugt damit ein asymmetrisches Produkt. Wenn diese Asymmetrie verhindert werden soll, besteht die Möglichkeit der Verwendung von zwei Düsenstreifen. Diese arbeiten entgegengesetzt, d.h. jeweils auf der Ober- oder Unterseite des Produktes und sind jeweils mit etwa der halben Düsenanzahl pro Zollbreite des einen Düsenstreifens ausgestattet. In diesem Fall empfiehlt sich eine Querbewegung dieser zwei Düsenstreifen gegeneinander, um kontinuierliche Teilungsfehler der beiden Düsenanordnungen zueinander zu vermeiden. Der Energieverbrauch in der Produktion ändert sich dabei nur unwesentlich

Im Vergleich zu der normalerweise eingesetzten Zahl von 40 Düsen pro Zollbreite des Düsenstreifens ist die Zahl der Düsen auf den erfindungsgemäß eingesetzten Düsenstreifen mit geringerer Anzahl von Düsen demgegenüber nur höchstens halb so groß. Es ist jedoch auch möglich, auf einen oder mehrere Düsenstreifen vollkommen zu verzichten und damit die Vernadelung auf ganz bestimmte Bereiche des Laminats zu konzentrieren. Hierdurch entsteht ein Laminat mit einer steppdeckenartigen Struktur.

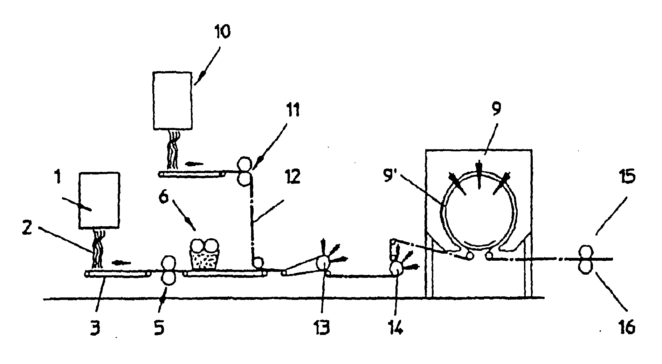

Eine erfindungsgemäße Vorrichtung zur Herstellung des erfindungsgemäßen voluminösen Faserlaminats ist in der beiliegenden Zeichnung dargestellt.

Die aus der Vorrichtung 1 kontinuierlich austretenden Endlosfasern 2 treffen auf das unten verlaufende Endlosband 3, das in Richtung des Pfeils läuft. Diesem Endlosband 3 ist ein Kalanderwerk 5 zugeordnet, das ― wenn es erwünscht ist ― durch Anwendung von Energie und Wärme auch ein feingeprägtes verfestigtes Vlies liefern kann. Die Kalandereinrichtung kann auch durch eine hier nicht dargestellte Luftverfestigungseinrichtung ersetzt werden. Nach diesem Verfahrensschritt erfolgt die Aufgabe des absorptionsfähigen Fasermaterials mit einer Vorrichtung 6. Danach wird ein zweites Trägervlies, das in der Vorrichtung 10 und den Kalandern 11 gebildet ist, als oberes Abdeckvlies auf das absorptionsfähige Fasermaterial gelegt und das so entstandene Schichtmaterial der Wasservernadelung zugeführt. Dazu dienen mehrere hintereinander angeordnete Vernadelungstrommeln 13, 14, die meanderförmig umfahren werden und denen jeweils die mit Pfeilen angedeuteten Düsenbalken von oben zugeordnet sind. Die sich anschließende Trocknung kann mit Belüftungstrocknern 9 erfolgen, dessen Siebtrommeln 9' der Ventilator extern zugeordnet ist. Anschließend kann auch hier der Kalander 15, 16 durchlaufen werden, bei dem dann aber beide Walzen 15 und 16 zu beheizen sind.

Das so durch die Beschreibung der Vorrichtung bereits dargestellte Herstellungsverfahren für das voluminöse Faservlies zeichnet sich also dadurch aus, dass zwischen den Trägervliesen eine oder mehrere Lagen eines absorptionsfähigen Fasermaterials durch Wasserstrahlvernadelung verfestigt werden und dabei über die gesamte Fläche des Verbundvlieses unter Ausbildung steppdeckenartiger Strukturen Bereiche mit hoher Vernadelungsdichte und Bereich mit geringerer Vernadelungsdichte erzeugt werden. Dabei können auch mehrere Vlieslagen übereinander auf dem Laminat abgelegt werden. In jedem Fall wird das Mehrlagenlaminat durch eine Wasserstrahlverfestigung miteinander verbunden und anschließend getrocknet.

Entscheidend für das erfindungsgemäße Verfahren ist, dass im Unterschied zum Stand der Technik nicht die ganze Fläche des Faserlaminats gleichmäßig vernadelt wird, sondern bestimmte Regionen stark vernadelt werden und andere Bereiche wenig oder gar nicht verfestigt werden. Diese nicht vernadelten Bereiche können dann eine sehr voluminöse Gestalt annehmen. Das entstehende Produkt zeichnet sich somit durch folgende vorteilhafte Merkmale aus:
1. es zeigt eine größere Dicke und Absorptionsfähigkeit als ein vollständig vernadeltes Faserlaminat;
2. es zeigt eine bessere Delaminationsfestigkeit als die bisher durch Vernadelung hergestellten Wisch- und Reinigungstücher, da die Bereiche mit erhöhter Vernadelung durch ihre starke Verfestigung die Delamination stoppen;
3. durch die gewölbten Decklagen besteht eine Dehnreserve in Querrichtung, wodurch das voluminöse Faserlaminat elastischer und weicher wird.

## Patentansprüche

1. Voluminöses Faserlaminat enthaltend zwischen zumindest zwei Trägervliesen eine oder mehrere Lagen eines absorptionsfähigen Fasermaterials, das durch Wasservernadelung verfestigt ist, **dadurch gekennzeichnet, dass** es über die gesamte Fläche des Faserlaminats Bereiche mit hoher Vernadelungsdichte und Bereiche mit geringerer Vernadelungsdichte unter Ausbildung einer steppdeckenartigen Struktur aufweist.

2. Reinigungs- oder Wischtuch bestehend aus einem voluminösen Faserlaminat gemäß Anspruch 1.

3. Vorrichtung zur Herstellung eines voluminösen Faserlaminats nach Anspruch 1, bestehend aus
- einer oder mehreren Spunbond- oder Krempeleinrichtung,
- einer oder mehreren Luftverfestigungs- oder Kalandereinrichtung,
- einer sich gegebenenfalls unmittelbar anschließenden Einrichtung zum Aufgeben von absorptionsfähigen Fasermaterial auf das vorverfestigte Faservlies und
- einer Wasservernadelungseinrichtung, **dadurch gekennzeichnet, dass** die Wasservernadelungseinrichtung neben Düsenstreifen mit einer großen Zahl von Düsen pro Flächeneinheit auch Düsenstreifen mit einer geringeren Zahl von Düsen aufweist oder ein Wasserbalken vollständig entfällt.

4. Verfahren zur Herstellung eines voluminösen Faserlaminats aus Verbundvliesen, bei denen zwischen den Trägervliesen eine oder mehrere Lagen eines absorptionsfähigen Fasermaterials durch Wasserstrahlvernadelung verfestigt sind, **dadurch gekennzeichnet, dass** über die gesamte Fläche des Verbundvlieses unter Ausbildung steppdeckenartiger Strukturen Bereiche mit hoher Vernadelungsdichte und Bereiche mit geringerer Vernadelungsdichte erzeugt werden.
